# EUROPEAN PATENT APPLICATION

(11) **EP 2 458 820 A1**
(43) Date of publication of application: **30.05.2012**
(21) Application number: 11190158.3
(22) Date of filing: 22.11.2011
(51) Int. Cl.: H04L 29/08

(54) **Apparatus and method for sharing captured data in portable terminal**

(30) Priority: 25.11.2010 KR 20100117860
(71) Applicant: Samsung Electronics Co., Ltd, Gyeonggi-do (KR)
(72) Inventor: Choi, Yoon-Suk, Gyeonggi-do (KR); Mun, Gi-Tae, Gyeonggi-do (KR); Park, Seung-Ho, Gyeonggi-do (KR)
(74) Representative: Hutter, Jacobus Johannes

(57) **Abstract**

An apparatus and method for acquiring captured data and for transmitting the acquired data to neighboring devices while acquiring the data and after completion of acquisition so as to share the data with other devices in the same network. The captured data may be image data or video data.

## Description

### BACKGROUND OF THE INVENTION

### 1. Field of the Invention

The present invention relates to an apparatus and method for providing an image acquisition in a portable terminal. More particularly, the present invention relates to an apparatus and method for acquiring captured data in the portable terminal and for transmitting the acquired data to a neighboring device while acquiring the data for sharing.

### 2. Description of the Related Art

Portable terminals have become necessities of modern life for people of all ages and typically used for wireless voice calls and data exchange.

Conventional portable terminals have generally been regarded as portable devices for providing wireless communication. However, along with technical advances and introduction of the wireless Internet, service providers and terminal manufacturers are developing different products and services for the convenience of users.

Accordingly, the portable terminal has now developed into a multimedia device capable of providing various services such as a phonebook, a game, a short message service (SMS), an Electronic mail (E-mail) service, a morning call, a MPEG-1 Audio Layer 3 (MP3) player, a scheduling management function, a digital camera, wireless Internet service, and other wide variety of services not mentioned above.

The digital camera function of a portable terminal enables users to capture images without having to carry a separate camera. A user can easily capture and store the image anytime, and then replay the captured image freely anywhere and anytime. Using the digital camera function, the user can print the image and also store the captured image into another device for sharing with others.

As described above, the conventional portable terminal inconveniently stores a captured image into a separate device to share the image.

To solve the aforementioned problem, there is a need for an apparatus and method for simplifying a process of sharing a captured image in a portable terminal.

### SUMMARY OF THE INVENTION

An exemplary aspect of the present invention is to provide an apparatus and method for sharing captured data acquired in a portable terminal with a neighboring device.

Another exemplary aspect of the present invention is to provide an apparatus and method for transmitting captured data in a portable terminal to a specific device after searching for neighboring devices that exist in the same network when acquiring the captured data.

A further exemplary aspect of the present invention is to provide an apparatus and method for selecting a specific device from neighboring devices that exist in the same network for sharing the captured data.

Yet another exemplary aspect of the present invention is to provide an apparatus and method for storing captured data into neighboring devices that exist in the same network.

In accordance with an aspect of the present invention, an apparatus for sharing captured data in a portable terminal includes: a data sharing unit for providing a list of neighboring devices which intend to share data when sharing the captured data, a data acquisition unit for acquiring the captured data, and a controller for selecting a device for sharing the data from the list, and for transmitting the captured data to the selected device while acquiring the captured data.

In accordance with another aspect of the present invention, a method for sharing captured data in a portable terminal includes: providing a list of neighboring devices when sharing the captured data, selecting a device for sharing the data from the list, acquiring the capture data, and transmitting the captured data to the selected device while acquiring the captured data.

In accordance with yet another aspect of the present invention, a terminal for sharing captured data with neighboring devices includes: a memory for storing the captured data; and a controller for searching a list of the neighboring devices within same network, for selectively selecting at least one neighboring device for sharing and unsharing after acquiring the captured data.

Other exemplary aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other exemplary aspects, features and advantages of certain exemplary embodiments of the present invention will be more apparent to a person of ordinary skill in the art from the following detailed description taken in conjunction with the accompanying drawings, in which:
FIG. 1 is a block diagram illustrating a structure of a portable terminal for sharing captured data according to an exemplary embodiment of the present invention;
FIG. 2 is a flowchart illustrating a process of sharing captured data in a portable terminal with a neighboring device according to an exemplary embodiment of the present invention;
FIG. 3 is a flowchart illustrating a process of receiving captured data in a portable terminal according to an exemplary embodiment of the present invention;
FIG. 4A illustrates a screen configuration of a portable terminal according to an exemplary embodiment of the present invention;
FIG. 4B illustrates a screen for selecting a neighboring device for sharing captured data in a portable terminal according to an exemplary embodiment of the present invention; and
FIG. 5 illustrates a process of sharing captured data in a portable terminal according to an exemplary embodiment of the present invention.

Throughout the drawings, like reference numerals will be understood to refer to like parts, components and structures.

### DETAILED DESCRIPTION OF EXEMPLARY EMBODIMENTS

The following description, with reference to the accompanying drawings, is provided to assist a person of ordinary skill in the art with a comprehensive understanding of certain exemplary embodiments of the invention provided herein for illustrative purposes. The description includes various specific details to assist a person of ordinary skill the art with understanding the claimed invention, but these details are to be regarded as merely exemplary. Accordingly, those of ordinary skill in the art will recognize that various changes and modifications of the illustrative examples described herein can be made without departing from the spirit of the invention and the scope of the appended claims. Further, for the purposes of clarity and simplicity, descriptions of well-known functions and constructions may be omitted as their inclusion may obscure appreciation of the subj ect matter of the claimed invention by a person of ordinary skill in the art.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustrative purposes only and is not to be construed as limiting the invention as defined by the appended claims and their equivalents.

It is to be understood that the singular forms "a," "an," and "the" include plural references unless the context clearly dictates otherwise. Thus, for example, a reference to "a component surface" includes reference to one or more of such surfaces.

By the term "substantially" it is typically meant that the recited characteristic, parameter, or value need not be achieved exactly, but that deviations or variations, including but in no way limited to, for example, tolerances, measurement error, measurement accuracy limitations and other factors known to persons of ordinary skill in the art, may occur in amounts that do not preclude the effect the characteristic was intended to provide.

The present invention described hereinafter relates to an apparatus and method for sharing captured data in a portable terminal with neighboring devices in the same network. The captured data is image data or video data that is input on a preview screen during recording, or from data pre-stored in a data storage. The same network may correspond to a communication area of the portable terminal, such as a Wi-Fi area that uses the same Access Point (AP), a Bluetooth communication area, an infrared communication area, etc.

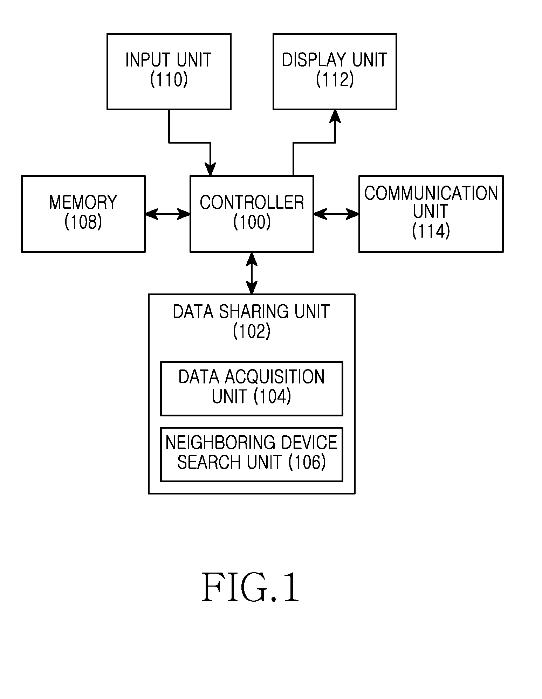

FIG. 1 is a block diagram illustrating a structure of a portable terminal for sharing captured data according to an exemplary embodiment of the present invention.

Referring now to FIG. 1, the portable terminal includes a controller 100, a data sharing unit 102, a memory 108, an input unit 110, a display unit 112, and a communication unit 114. The data sharing unit 102 may include a data acquisition unit 104 and a neighboring device search unit 106. The portable terminal may include additional units that are not illustrated here for sake of clarity. Note that the functionality of two or more of the above units may be integrated into a single component.

The controller 100 of the portable terminal provides overall control to the portable terminal. For example, the controller 100 processes and controls voice and data communications. In addition to its basic communication function, according to the present invention, the controller 100 allows the data acquisition unit 104 to acquire captured data such as image data and video data and to share the acquired captured data with neighboring devices while acquiring the captured data. That is, a specific neighbor device is selected prior to acquiring of the captured data, then after capturing data with the terminal, the captured data is transmitted to the selected device. In addition, the controller 100 can provide control to share pre-stored data with the neighboring devices.

In operation, the controller 100 provides control to determine a device for sharing the captured data among the neighboring devices and then to transmit the captured data to the determined device.

The data sharing unit 102 acquires the captured data to be shared with the neighboring devices under the control of the controller 100, and then shares the acquired captured data with the neighboring devices that exist in the same network.

The data acquisition unit 104 of the data sharing unit 102 acquires the captured data such as image data or video data, and may include a camera module capable of capturing a subj ect.

The neighboring device search unit 106 of the data sharing unit 102 searches for neighboring devices to share the captured data acquired by the data acquisition unit 104 under the control of the data sharing unit 102. In this case, the neighboring device search unit 106 searches for the neighboring devices that exist in the same network, and for example, searches neighboring devices that access to the same AP.

The memory 108 includes a Read Only Memory (ROM), a Random Access Memory (RAM), and a flash ROM. The ROM stores a microcode of a program, by which the controller 100 and the data sharing unit 102 are processed and controlled, and a variety of reference data.

The RAM is a working memory of the controller 100 and stores temporary data that is generated while various programs are performed. The flash ROM stores a variety of rewritable data, such as phonebook entries, outgoing messages, and incoming messages.

The input unit 110 includes a plurality of function keys such as numeral key buttons of '0' to '9', a menu button, a cancel button, an OK button, a talk button, an end button, an Internet access button, a navigation key button (or a direction key), and a character input key. Key input data, which is input by a user, is provided to the controller 100.

The display unit 112 displays information such as state information, which is generated while the portable terminal operates, characters, large volumes of moving and still pictures, etc. The display unit 112 may be a color Liquid Crystal Display (LCD), an Active Mode Organic Light Emitting Diode (AMOLED) display, and other types of thin-film technology screen display apparatuses. The display unit 112 may include a touch input device as an input device when using a touch input type portable terminal.

The communication unit 114 transmits and receives a Radio Frequency (RF) signal of data that is input and output through an antenna (not illustrated). For example, during a transmitting mode, data to be transmitted is subject to a channel-coding process and a spreading process, and then the data is transformed to an RF signal. During a receiving mode, the RF signal is received and transformed to a base-band signal, and the base-band signal is subject to a de-spreading process and a channel-decoding process, thereby restoring the data. Further, the communication unit 114 transmits the acquired captured data to the neighboring devices according to the exemplary embodiment of the present invention.

Although a function of the data sharing unit 102 can be performed by the controller 100, they are separately constructed in the present invention for illustrative purposes only. However, functions of the data sharing unit 102 and the controller 100 can be both processed by the controller 100. Thus, those ordinary skilled in the art can understand that various modifications can be made within the scope of the present invention.

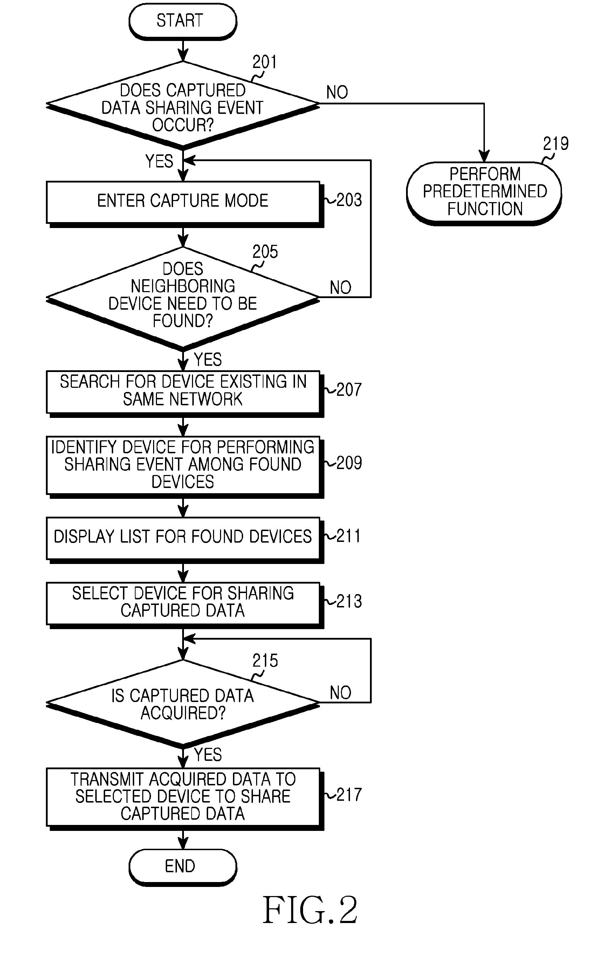

FIG. 2 is a flowchart illustrating a process of sharing captured data in a portable terminal with a neighboring device according to an exemplary embodiment of the present invention.

Referring now to FIG. 2, the portable terminal determines whether a captured data sharing event occurs in step 201. Herein, the captured data sharing event is an event for sharing data (e.g., image data, video data, etc.) acquired by the data acquisition unit 104 (e.g., camera module) of the portable terminal with neighboring devices. That is, a subject displayed on a preview screen is transmitted to the neighboring devices when pressing a capture button.

If the captured data sharing event does not occur in step 201, proceeding to step 219, the portable terminal performs a predetermined function (e.g., a standby mode).

Meanwhile, if the captured data sharing event occurs in step 201, proceeding to step 203, the portable terminal enters a capture mode and activates the previous screen on which the subject is input. In this case, the portable terminal divides the previous screen into a plurality of areas for displaying the capture button and a button for searching for neighboring devices. A portion of the screen displays a list of the neighboring devices that may be selectively selected and unselected for sharing captured data according to a user's selection.

In step 205, the portable terminal determines whether there is a user's request for searching for the neighboring devices.

In the user's request for searching for the neighboring devices is not detected in step 205, step 203 is repeated.

Otherwise, if the user's request for searching for the neighboring devices is detected in the preview screen in step 205, proceeding to step 207, the portable terminal searches for the neighboring devices that exist in the same network. For example, this process is a process of searching for neighboring devices that exist in a Wireless Local Area Network (WLAN) environment in which the same AP is used.

In step 209, the portable terminal identifies a device for performing a sharing event among the found neighboring device. Herein, the device that performs the sharing event implies a terminal which sets up for sharing of captured data or which has previously installed an application for sharing the capture data.

In step 211, the portable terminal displays a list of devices found in the same network. In step 213, the portable terminal selects a specific device for sharing the captured data from the device list.

In step 215, the portable terminal determines whether the captured data is acquired. That is, in the process of step 215, the portable terminal determines whether a capture button for acquiring image or video data is input by a user.

If it is determined step 215 that the capture data is not acquired, step 215 is repeated.

Otherwise, if it is determined in step 215 that the captured data is acquired, proceeding to step 217, the portable terminal shares the captured data by transmitting the captured data acquired by the neighboring device selected in step 213 (i.e., the neighboring device selected for sharing the captured data).

The method of sharing the captured data can be implemented by using an application that can be downloaded through the Internet or from an application store. Thereafter, the captured data can be shared with a neighboring device to which the application is installed among the devices that exist in the same network.

Thereafter, the procedure of FIG. 2 ends.

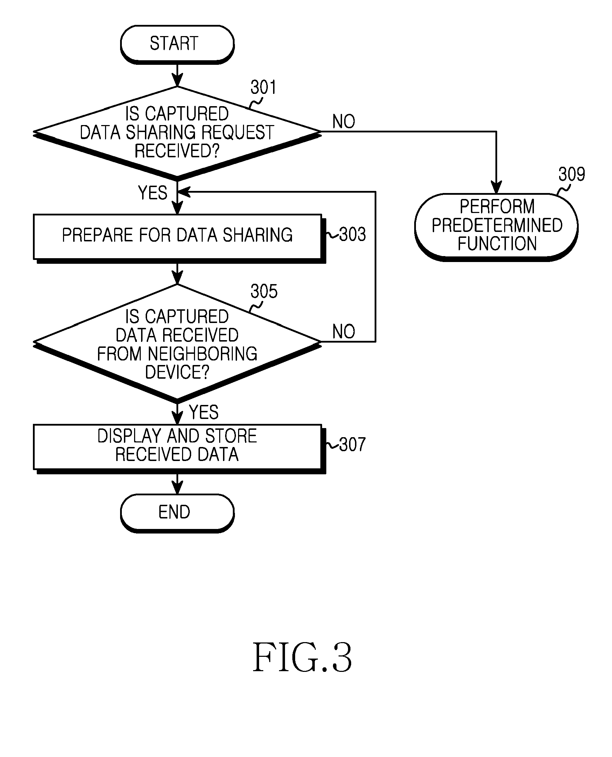

FIG. 3 is a flowchart illustrating a process of receiving captured data in a portable terminal according to an exemplary embodiment of the present invention.

Referring to FIG. 3, the portable terminal determines whether a captured data sharing request is received in step 301. Here, it is determined whether a request for sharing captured data acquired from a neighboring device is received.

If it is determined in step 301 that the captured data sharing request is not received, proceeding to step 309, the portable terminal performs a predetermined function (e.g., a standby mode).

Otherwise, if it is determined in step 301 that the captured data sharing request is received, proceeding to step 303, the portable terminal prepares for data sharing mode. In this case, the portable terminal can enter a capture mode for displaying a preview screen to determine for the captured data to be shared, and if an application for sharing the captured data is installed, executes the installed application.

In step 305, the portable terminal determines whether the captured data is received from the neighboring device.

If it is determined in step 305 that the captured data is not received from the neighboring device, step 303 is repeated.

Otherwise, if it is determined in step 305 that the captured data is received from the neighboring device, proceeding to step 307, the portable terminal displays the received data and stores the data while displaying the data. In this case, the portable terminal generates a specific folder to store and manage the received captured data (i.e., the captured data to be shared).

Thereafter, the procedure of FIG. 3 ends.

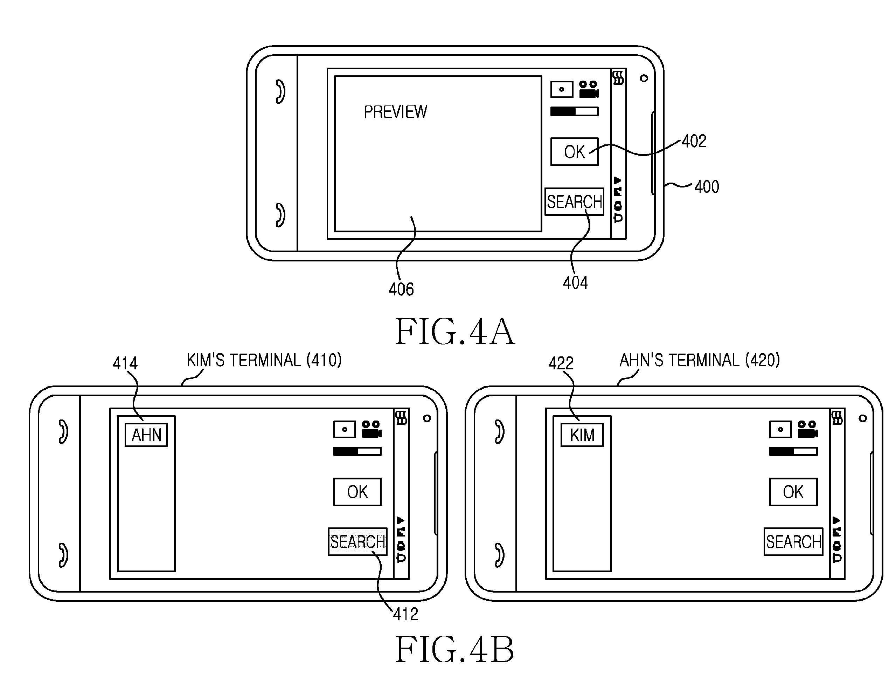

FIG. 4 illustrates a process of selecting a neighboring device for sharing captured data in a portable terminal according to an exemplary embodiment of the present invention.

FIG. 4A illustrates a screen configuration of a portable terminal according to an exemplary embodiment of the present invention.

Referring to FIG. 4A, the portable terminal enters a camera mode when sharing captured data. Here, the camera mode is a mode for capturing a subject of data capturing and includes a preview area 406 for receiving an input of the subject to be captured, a capture button 402 for activating of the capturing of the subject which is input on the preview screen, and a button for selecting an image or video capture mode as shown in an upper portion of the capture button. According to the present invention, the camera mode also includes a button 404 for searching for a neighboring device that exists nearby.

The button 404 for searching for the neighboring device is a button for searching for a neighboring device that exists in the same network (e.g., an environment of a WLAN connected through the same AP).

FIG. 4B illustrates a screen for selecting a neighboring device for sharing captured data in a portable terminal according to an exemplary embodiment of the present invention.

Referring to FIG. 4B, upon detection of an input of a button for searching for a neighboring device, the portable terminal allocates some areas of a preview screen to an area 414 for displaying a list of neighboring devices. Thus, after searching for the neighboring device, the portable terminal displays the list of the found neighboring device to the allocated area 414.

Alternatively, if a user of a portable terminal 410 named "KIM" inputs a neighboring device search button 412 as illustrated, the portable terminal 410 searches for a portable terminal named "AHN" and existing nearby.

As a result, the portable terminal displays an icon "AHN" (as indicated by a reference numeral 414) when displaying the list of neighboring devices to report the existence of a terminal 420 named "AHN".

In addition, the portable terminal 420 named "AHN" also determines that the portable terminal 410 named "KIM" exists nearby, and thus displays an icon "KIM" (as indicated by a reference numeral 422) when displaying the list of neighboring devices to report the existent of the terminal named "KIM".

The portable terminal can enter the camera mode when the user directly enters the camera mode to share the captured data or when an application for sharing the captured data is executed.

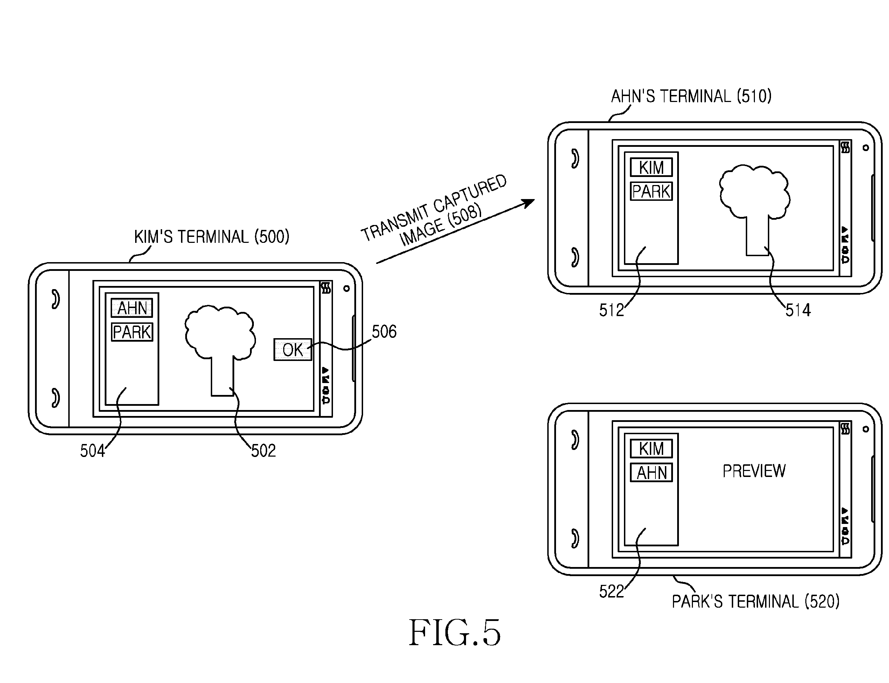

FIG. 5 illustrates a process of sharing captured data in a portable terminal according to an exemplary embodiment of the present invention.

Referring to FIG. 5, it is assumed that a portable terminal 500 named "KIM", a portable terminal 510 named "AHN" and a portable terminal 520 named "PARK" exist in the same network.

A user of any one of these portable terminals searches for neighboring devices, and each portable terminal displays a list of neighboring devices.

That is, the portable terminal 500 named "KIM" reports that the portable terminals 510 and 520 named "AHN" and "PARK" are located nearby (as indicated by a reference number 504), and the portable terminal 510 named "AHN" reports that the portable terminals 500 and 520 named "KIM" and "PARK" are located nearby (as indicated by a reference numeral 512). Further, the portable terminal 520 named "PARK" reports that the portable terminals 500 and 510 named "AHN" and "KIM" are located nearby (as indicated by a reference numeral 522).

If a user of the portable terminal 500 named "KIM" intends to capture a tree as a subject 502 and to share it with a user of the neighboring device, the user of the portable terminal named "KIM" selects "AHN" and "PARK" displayed on the list of neighboring devices, and transmits an image (i.e., an image of the tree subject) acquired by using a capture button 506 to the portable terminals 510 and 520 named "AHN" and "PARK"

However, when the user of the portable terminal 500 named "KIM" intends to transmit the captured data only to the portable terminal 510 named "AHN", as illustrated in FIG. 5, the portable terminal 510 named "AHN" is selected from the neighboring device list 504 on which the portable terminals named "AHN" and "PARK" are displayed on the portable terminal 500 named "KIM".

If it is determined that a button 506 for capturing the tree displayed on a preview screen is inputted, the portable terminal 500 named "KIM" transmits the captured data only to the portable terminal 510 named "AHN" (as indicated by a reference numeral 508).

Accordingly, the portable terminal 510 named "AHN" displays the captured data received from the portable terminal 500 named "KIM" on the preview screen (as indicated by a reference number 514), and stores the received captured data into data storage space.

Meanwhile, the portable terminal 520 named "PARK" does not receive the captured data from the portable terminal 500 named "KIM", and thus maintains the output of the preview screen.

Furthermore, the portable terminal 510 named "AHN" and the portable terminal 520 named "PARK" can also search for neighboring devices at a user's request, and can perform an operation of sharing the captured data.

Accordingly, the captured data can be shared between the terminals named "KIM" and "AHN", between the terminals named "KIM" and "PARK", and between the terminals named "AHN" and "PARK".

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

The present invention described above relates to an apparatus and method for acquiring captured data in a portable terminal and for transmitting the captured data to a neighboring device to share the data while acquiring the data and after completion of the acquisition of the data. By transmitting the captured data to the neighboring device when acquiring the captured data simultaneously, the captured data can be shared without a separate data sharing process.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. An apparatus for sharing captured data in a portable terminal, comprising:
a data sharing unit for searching a list of neighboring devices within same network;
a data acquisition unit for acquiring the captured data; and
a controller for selecting a particular device for sharing the captured data from the list and for simultaneously transmitting the captured data to the selected device after acquiring the captured data.

2. The apparatus of claim 1, wherein the captured data is at least one of image data or video data that is input on a preview screen and a pre-stored data from a memory.

3. The apparatus of claim 1,
wherein the neighboring devices exist in the same network as the portable terminal, and
wherein the same network is at least one of a Wi-Fi area that uses the same Access Point (AP), a Bluetooth communication area, and an infrared communication area.

4. The apparatus of claim 1, wherein the data sharing unit divides a preview screen into a plurality of areas and thereafter allocates some of the divided areas to an area for displaying the list of neighboring device and allocates the remaining areas to a button for requesting a search of the neighboring devices.

5. The apparatus of claim 1, wherein the controller requests one of the neighboring device to share data.

6. The apparatus of claim 5, wherein the neighboring device to which the sharing of the data is requested displays a preview screen and thereafter displays the received captured data on the preview screen, and stores the received captured data into a memory.

7. The apparatus of claim 1, wherein a process of neighboring device searching and captured data sharing is performed by executing an application.

8. A method for sharing captured data in a portable terminal, the method comprising:
searching a list of neighboring devices within a same network;
selecting a particular device for sharing the captured data from the list; and
transmitting the captured data to the selected device after acquiring the captured data.

9. The method of claim 8, wherein the captured data is at least one of image data or video data that is input on a preview screen and a pre-stored data from a storage.

10. The method of claim 8,
wherein the neighboring devices exist in the same network, and
wherein the same network is at least one of a Wi-Fi area that uses the same Access Point (AP), a Bluetooth communication area, and an infrared communication area.

11. The method of claim 8, further comprising:
displaying a preview screen;
dividing the preview screen into a plurality of areas;
allocating some of the divided areas to an area for displaying the list of neighboring device; and
allocating the remaining areas to a button for requesting a search of the neighboring devices.

12. The method of claim 8, further comprising:
selecting one of neighboring devices for sharing data; and
requesting the selected device to share the data.

13. The method of claim 12,
wherein the neighboring device to which the sharing of the data request is requested performs displaying of a preview screen, and displaying of the received data on the preview screen, and
wherein the received d data is stored into storage.

14. The method of claim 8, wherein a process of neighboring device searching and captured data sharing is performed by executing an application.
